# EUROPEAN PATENT SPECIFICATION

(11) **EP 1 516 488 B1**
(45) Date of publication and mention of the grant of the patent: **13.05.2009**
(21) Application number: 03727856.1
(22) Date of filing: 27.05.2003
(51) Int. Cl.: H04N 7/167

(54) **CONDITIONAL ACCESS APPARATUS AND METHOD**
VORRICHTUNG UND VERFAHREN MIT BEDINGTEM ZUGANG
PROCEDE ET APPAREIL D'ACCES CONDITIONNEL

(30) Priority: 12.06.2002 EP 02077291
(43) Date of publication of application: 23.03.2005
(73) Proprietor: Irdeto Eindhoven B.V., 2132 HD Hoofddorp (NL)
(72) Inventor: KAMPERMAN, Franciscus, L., A., J., NL-5656 AA Eindhoven (NL); RIJCKAERT, Albert, M., A., NL-5656 AA Eindhoven (NL); VAN RIJNSOEVER, Bartholomeus, J., NL-5656 AA Eindhoven (NL)
(74) Representative: de Vries, Johannes Hendrik Fokke
(86) International application number: PCT/IB2003/002341
(87) International publication number: WO 2003/107670

(56) References cited:
- EP-A- 0 714 204
- EP-A- 0 858 184
- EP-A- 0 866 615
- EP-A- 1 100 266
- WO-A-01/15448
- US-A- 5 991 400

## Description

The field of the invention is a data distribution system that allows for conditional access to the distributed data. The invention also relates to an apparatus for recording the distributed data and an apparatus for replaying recorded data.

US patent No. 5,991,400 describes a data distribution system that realizes conditional access by means of distribution of a data stream that contains encrypted data. Subscribers of the system are provided with receivers. Each receiver is provided with a secure device, such as a smart card, that enables decryption of the distributed data.

Decryption makes use of control words that are normally distributed as part of the data stream in messages (called ECM's: ECM=Entitlement Control Message) that are part of the data stream. The ECM's contain encrypted control words. Similarly, keys for decrypting the ECM's are distributed in messages (EMM's: Entitlement Management Messages) that are part of the data stream. ECM's are generally the same for all subscribers, but the EMM's are subscriber specific. Therefore EMM's for a specific subscriber are transmitted much less frequently than EMM's overall.

The data stream can be recorded for time-shifting purposes, i.e. to decrypt the stream at a later time than when it was distributed. US patent No. 5,991,400 describes the use of a recorded data stream. According to this patent basically the same decryption mechanism is used for "live" and "time-shifted" playback, but additionally relevant keys from EMM's are recorded in association with the data stream and supplied on playback to enable decryption on play back. In one embodiment, the relevant keys are decrypted from the EMM's when they are originally received and re-encrypted before they are recorded. This permits various forms of control over entitlement to view recorded data.

However, this means that the authorization key in the secure device has to change during replay or between replays of different programs in a way determined by the original transmission of the stream. If the secure device contains protection measures against unauthorized replay it might be impossible to realize such changes. To get a better control over access to recorded information and to minimize the changes in authorization keys it would be desirable to be able to use a special authorization key for replaying all recorded information. However, this means that the original ECM's used for live access cannot be used during replay. One way to realize this is to replace all ECM's by new ECM's with the same control words as the original ECM's encrypted so that the new ECM's can be decrypted with a replay authorization key. When this is done during recording of the stream the stream needs to be buffered for the amount of time that is needed to generate a new ECM from an old ECM. This would require a considerable amount of buffer storage.

EP-A-0 714 204 describes an illegal view and copy protection method in a digital video system containing a recording step for recording the scrambled data on a recording medium either as scrambled data of a bitstream and a keystream according to a recording or copying mode, or after splitting the scrambled data into a bitstream and a keystream, encrypting the split keystream, and mixing the encrypted keystream with the bitstream.

Amongst others it is an object of the invention to provide for more flexible storage of encrypted data and playback of that encrypted data.

Amongst others it is another object of the invention to provide for accurate timing of delivery of decryption information during replay of a stream of encrypted data.

The invention provides for a method according to Claim 1. According to the invention the items with decryption information, such as ECM's, are retrieved during replay from a separate file and added to the encrypted stream and in synchronization with replay of the stream. That is, the items of decryption information are stored separately retrievable from the stored stream, not among the stored stream at the positions where they were originally received (this is done in storage means that may comprise a single storage device such as a magnetic disc in which both the stream and the items of decryption information are stored, but the storage means may also contain different storage devices, in which the stream and the items are stored respectively, or the stream and/or the items may be stored spread over different devices). Separately accessible storage of items of decryption information, such as ECM's, allows processing of the items of decryption information during storage (for example decryption and reencryption with another key) without use of a buffer memory to store the stream temporarily until the items are available. Alternatively, it allows transmission of special ECM files for use during replay with a special replay authorization key.

When the timing of delivery of the items of decryption during replay is critical, as is the case for example for ECM's that change frequently during replay, special measures are preferably taken to ensure accurate timing

In an embodiment of the method according to the invention time stamps are used to select the time at which the items of decryption information are delivered. Each item is stored in association with its own time stamp (for example together with the associated item in a same record in memory, or by storing a pointer to item with the time stamp etc). During replay a time value is counted, and the item is delivered when the time value corresponds to the time stamp of an item of decryption information. Preferably, the timestamp values are determined by sampling a timer when the decryption information is received at the time of recording. This ensures correct timing without need for additional information. As an alternative, a file with items of decryption information and corresponding time stamps may be prepared by a broadcaster and transmitted to selected receivers to enable replay of recorded data. In this case, no additional measures are needed when a receiver records a broadcast signal that is normally intended for live decryption.

In another embodiment sequence numbers are assigned to the items with decryption information, and the sequence numbers are stored among the encrypted data at positions relative to the encrypted data that correspond to the time of reception of the messages that contained the decryption information. The items of encryption information are associated with the sequence numbers, for example by storing the item at a location that is addressed by the sequence number, or storing the sequence numbers together with pointers to the items. During replay, an item of decryption information is replayed in response to detection of its associated sequence number among the retrieved encrypted data. The sequence number can be stored with the data even before the corresponding item has been reencrypted. In an embodiment the original messages that contain the original decryption information are stored with the encrypted data, at memory locations relative to the encrypted data that correspond to their time of reception of the messages. In this embodiment the sequence numbers are added to the stored messages. Thus, accurate timing is automatically ensured during replay.

Preferably, during broadcast of the stream the broadcaster either pre-inserts the sequence numbers or leaves space for inserting the sequence numbers. This ensures even better timing accuracy.

These and other objects and advantageous aspects of the method and apparatus according to the invention will be described in more detail using the following figures.
Figure 1 shows a prior art conditional access apparatus;
Figure 2 shows a conditional access apparatus with a recording medium;
Figure 3 shows temporal relations between information in a data stream;
Figure 4 shows an embodiment of a conditional access apparatus;
Figure 5 shows a data structure;
Figure 6 shows a data structure;
Figure 7 shows a data structure;
Figure 8 illustrates the use of encrypted data during trick mode replay.

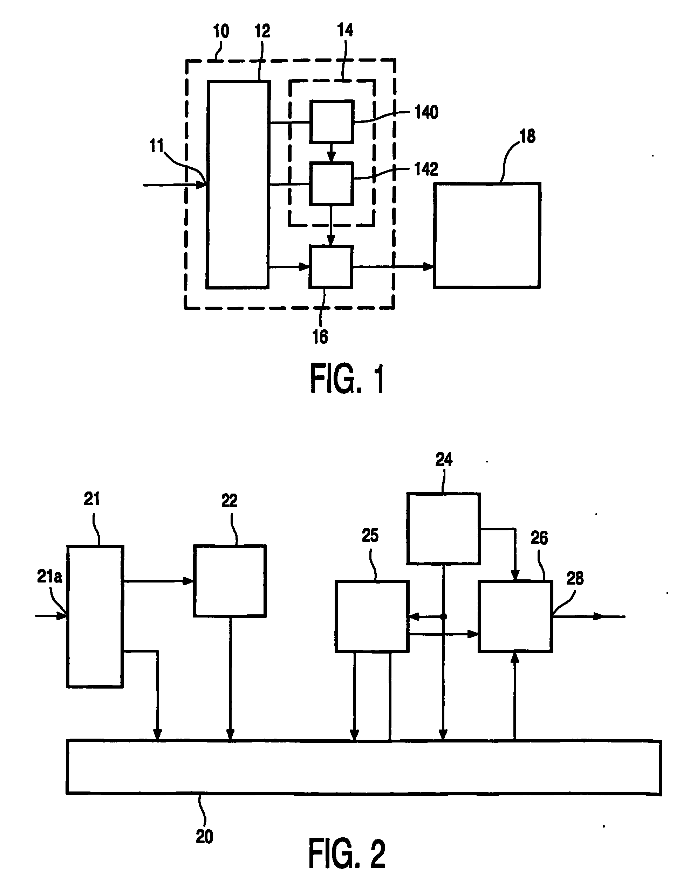

Figure 1 shows a conditional access apparatus. The apparatus contains a reception unit 10, such as a set-top box and a rendering device 18, such as a television set. The reception unit 10 has an input 11 for receiving an input signal from for example a cable TV system or a satellite broadcast receiving unit, a demultiplexer 12, a secure device 14 (such as a smart card) and a data decryption unit 16. A first output of demultiplexer 12 is coupled to rendering device 18 via decryption unit 16. Secure device 14 contains an EMM processing element 140 and an ECM processing element 142. A second and third output of demultiplexer 12 are coupled to the EMM processing element 140 and the ECM processing element 142 respectively. EMM processing element 140 has an output coupled to ECM processing element 142. ECM processing element 142 has an output coupled to decryption unit 16. (Although EMM processing element 140 and ECM processing element 142 are shown separately, their function may in fact be implemented using different program parts running on the same microprocessor in secure device 14).

In operation reception unit 10 receives a data stream from input 11. The data stream contains encrypted data, entitlement control messages (ECM's) and entitlement management messages (EMM's), multiplexed in the data stream. The ECM's contain control words for decrypting the encrypted data and the EMM's contain entitlement information, including keys for decrypting control words from the ECM's. Demultiplexer 10 demultiplexes encrypted data, ECM's and EMM's and outputs encrypted data (or a part thereof) to decryption unit 16, ECM's to ECM processing element 142 and EMM's to EMM processing element 140. ECM processing element 142 extracts control words from the ECM and supplies these control words to decryption unit 16. Decryption unit uses the control words to decrypt the encrypted data and supplies decrypted data to rendering device 18, which displays images coded by the data on a display screen and/or renders audio data.

EMM processing element 140 extracts entitlement information from the EMM's and uses this information to control for which encrypted data ECM processing element 142 supplies control words to decryption unit 16. EMM processing element 140 also obtains decryption keys from the EMM's and supplies these keys to ECM processing element 142 for use in decryption of the control words from the ECM's.

### Recording streams of encrypted data

Figure 2 shows a conditional access apparatus with a mass storage unit 20, such as a magnetic or optical disk, a tape recorder or even semi-conductor memory. A recording side 21, 22 and a play-back side 24, 25, 26 are shown (for the sake of clarity separate recording and playback sides are shown, but it will be understood that the hardware that implements the recording side and the playback side may in fact overlap to a considerable extent; also, although various separate inputs and outputs to medium 20 are shown for clarity one or more of the inputs and/or output may in fact be combined).
The recording side contains a demultiplexer 21 and a decryption information recording unit 22. The demultiplexer 21 has an input 21 a coupled to an input of the apparatus, which may be coupled for example to a cable TV system or a satellite broadcast receiving unit.
Demultiplexer 21 has outputs coupled to the mass storage unit 20 and to decryption information recording unit 22. Decryption information recording unit 22 has an output coupled to mass storage unit 20.

The playback side contains a control unit 24, a decryption information access unit 25 and a reception unit 26. The control unit 24 has a control output coupled to reception unit 26 and an address selection output coupled to mass storage unit 20 and decryption information access unit 25. Decryption information access unit 25 has inputs and output coupled to mass storage unit 20 and an output coupled to reception unit 26.

The conditional access apparatus of figure 2 is designed to receive a data stream of the type that can be handled by the reception unit 10 of figure 1, record encrypted information from this data stream in mass storage device 20 and play back the information at a later time from mass storage device. During playback the information is decrypted at the playback side.

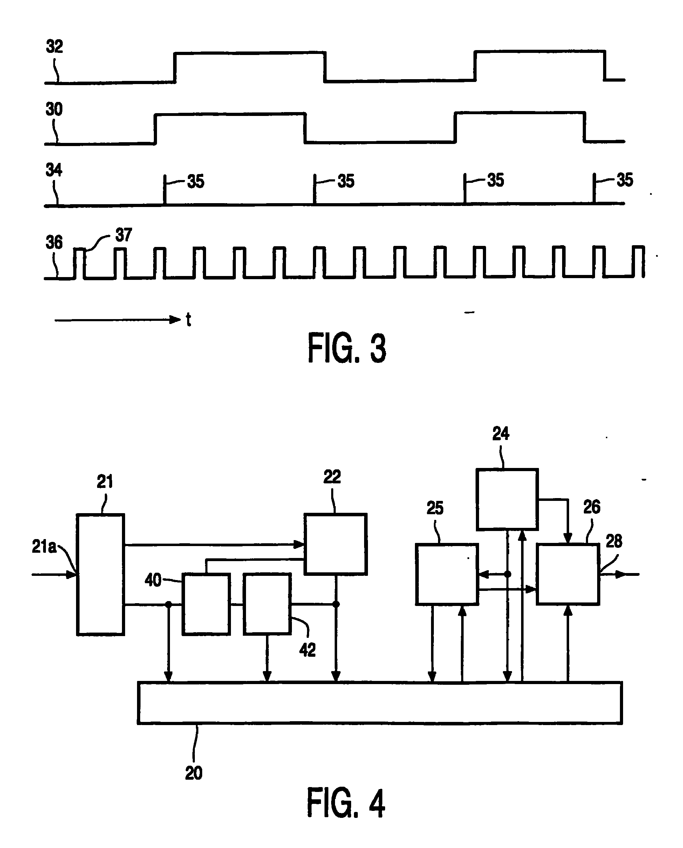

Figure 3 shows temporal relations between information in the data stream. The data stream contains encrypted data and decryption information for decrypting the encrypted data (decryption information is included in for example ECM's and EMM's). The encrypted data is segmented into successive segments of for example 10 seconds. Each segment requires its own control word to decrypt the data in the segment. Generally the control words of different segments are different. The data stream contains information that identifies different segments. Figure 3 shows a signal 30 that toggles each time a different segment starts. In DVB this is indicated by the scrambling control bits in the packet header.

The decryption information supplies the control words (for example in ECM's). Typically each control word is supplied a number of times distributed over the segment for which it is needed. This ensures that each control word will be available on short notice when a subscriber selects the data stream. Moreover the control word is preferably also supplied prior to the segment. This allows time to decrypt the control word before it is needed. Thus time intervals are created in each of which the control word for a respective segment is supplied. These time intervals do not coincide with the segments. The final part of a time interval in which one control word is supplied generally overlaps with the initial part of a next time interval in which the next control word is supplied. In each ECM for example two control words are usually included, one for a current segment and one for a next segment. When the content of the ECM's changes, the oldest control word is omitted and a next control word is included.

A second signal 32 figure 3 illustrates the time intervals. Each control word is supplied during a whole period of the second signal 32. At each transition of the second signal 32 a new control word starts to be supplied and an oldest control word stops being supplied. Preferably the stream contains information from which the transitions of the second signal 32 can be determined. In DVB this is indicated by the Table-ID.

It should be noted that transitions in the first signal 30 preferably do not need to coincide with transitions in the second signal 32. That is, the time that encrypted data starts to come in for which a new control word is needed does not in general coincide with the time when a new control word starts to be supplied. This relaxes the timing requirement on the data stream.

The apparatus of figure 2 extracts encrypted data and decryption information from the stream received at input 21a, at least when a user of the apparatus provides a control signal to do so. Demultiplexer 21 writes the encrypted data to mass storage unit 20. Decryption information recording unit 22 writes items of decryption information to mass storage unit 20. The items of decryption information are written so that they can be accessed separately from the encrypted data, that is, they need not be accessed as part of a data stream at a predefined position in that data stream corresponding to their position in the original data stream received at input 21 a.

Decryption information recording unit 22 writes items of decryption information to mass storage unit 20 in encrypted form. For this, the original encrypted decryption information (e.g. a copy of an ECM) may be used, or, alternatively, decryption information recording unit 22 may first decrypt the decryption information and re-encrypt it with some key before writing it to mass storage unit 20. The latter has the advantage that the original authorization key from the EMM's is no longer needed to decrypt the control words. This authorization key may not be available at the time of replay, or at least it might require considerable overhead if this authorization key would have to be used at that time. The key that is used for re-encryption may be a key that is local to the apparatus. The apparatus may be entitled to use this key indefinitely, or only for a limited period during which replay is permitted.

In addition to the decryption information, decryption information recording unit 22 writes synchronization information to mass storage unit, which links the items of synchronization information to points in the stream of-encrypted data.

Figure 4 shows an embodiment in which the apparatus contains a decryption unit 40 for decrypting the stream of encrypted data concurrently with storing the stream. In this embodiment the apparatus contains an isolated frame detection unit 42 for locating frames of a video signal that are described in isolation in the signal decrypted from the stream of encrypted data. In figure 3 a fourth signal 36 is shown, illustrating the encrypted data stream with parts 37 that contain such isolated frames. As is well known, from MPEG signals for example, a sequence of images can be compressed by providing information describing some frames (I frames) in isolation and other frames (B frames and P frames) in terms of changes relative to other frames.

In the embodiment of figure 4 decryption information recording unit 22 writes items of decryption information each containing control words of a respective ECM into mass storage unit 20. The control words are written in encrypted form, as described for figure 2. The isolated frame detection unit 42 writes access information into mass storage device 20.

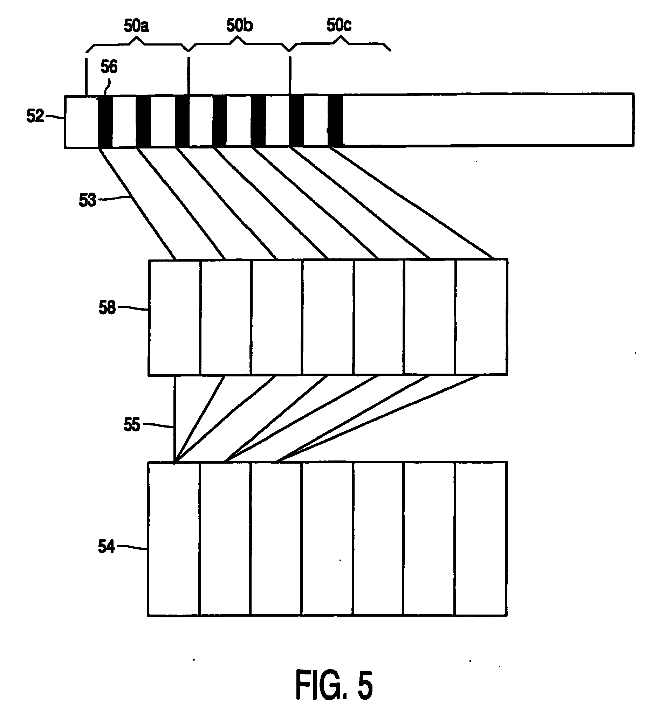

Figure 5 shows an example of a data structure of the access information. The figure shows the stored stream of encrypted data 52, containing parts of the encrypted data that describes I frames (e.g. 56). Different segments 50a-c of the stream 52 are indicated. Each segment 50a-c requires its own control word to decrypt the encrypted data in the segment. The figure also shows a block 54 of stored items of decryption information. Furthermore, a block 58 of access information is shown. The access information addresses respective parts of the stream 52 of encrypted data that contain isolated frames and corresponding items of decryption information that may be used to decrypt each part.

For example, for each detected isolated frame a pair of addresses (X,Y) is stored in an entry in the block of access information 58. The addresses X,Y constitute pointers 53, 55 addressing locations in mass storage unit 20 that store encrypted data that contain an isolated frame and an item of decryption information for that encrypted data respectively. The addresses (X, Y) may be absolute addresses for mass storage unit, or relative addresses or counter values, indicating a position within relevant stored information blocks 52, 54 etc..

During replay in certain trick modes the isolated frames will be used to replay the stream, omitting other frames. However, it will be understood that the invention is not limited to the use of isolated frames for this replay. Parts of the data stream that can otherwise be used for trick play may be used instead. In this case isolated frame detection unit 42 may be replaced by a unit for detecting any other type of relevant information in the stream of data, and the apparatus provides pointers to parts 56 of the stream 52 of encrypted data that contain this type op information.

### Lining decryption information to points in the stream

Various methods may be used to link the items of decryption information to points in the stream of encrypted data, also when the embodiment of figure 4 is not used.

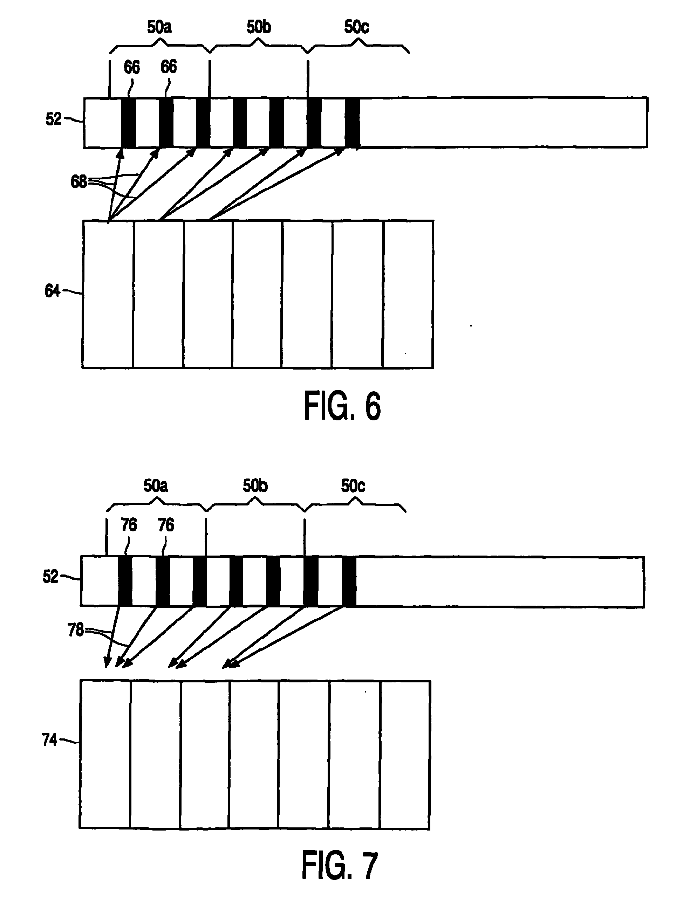

Figure 6 shows an example of a data structure used in one embodiment. The figure shows a stream 52 of encrypted data and a block 64 of items of decryption information. Block 64 contains pointer information to locations 66 in the stream 52. Arrows 68 illustrate that the pointer information points to locations 66 in the stream 52.

In this embodiment decryption information recording unit 22 records a position in the encrypted data stream associated with the decryption information in each item. In one further embodiment this may be a pointer to stored encrypted data that was received immediately adjacent at the position of the pointer in the incoming stream. Recording of pointers to locations in the stream enables playback of the decryption information with the same timing relative to the encrypted data as at the time of original reception.

As will be described in the following the decryption information in an item of block 64 may correspond to decryption information in a plurality of messages from the stream, only one item of decryption information being stored for that plurality. In this case, it may be sufficient to supply the encryption information from the item only once during replay, but for security reasons it may be necessary to replay the decryption information at each point where the original stream contained a message with decryption information.

In an embodiment where decryption information recording unit 22 only stores one item for a plurality of messages, therefore, decryption information recording unit 22 detects positions of encrypted data in the incoming stream where messages with encryption information corresponding to the item occur and decryption information recording unit 22 stores information about a plurality of pointers 68 in association with the item, the pointers 68 pointing to positions in the stream of encrypted data where messages with encryption information corresponding to the item occurred in the incoming stream.

In another embodiment time-stamp information may be stored instead of the one or more pointers 68. The time stamp information specifies a time value at which the decryption information should be played back. This makes it possible to supply the decryption information at time points determined by replay of the stream. In this embodiment decryption information recording unit 22 samples the time stamp from a time stamp counter (not shown) that is updated with progression of the incoming stream. In the case of prior art MPEG data in the stream for example, the stream contains information that makes it possible to assign time values to different points in the stream. Decryption information recording unit 22 may use these time values.

Figure 7 shows an alternative data structure, in which decryption information recording unit 22 stores pointer information 76 with the stored stream of encrypted data 52. The pointer information 76 points (as illustrated by arrows 78) items of decryption information in a block 74 of such items. Each element of pointer information 76 is stored at respective position among the encrypted data 52 that corresponds to the item of encryption information in block 74, in any of the ways described in the preceding. This enables retrieval of the corresponding item during playback so that the decryption information from the original stream is replayed in substantially the same relative timing relationship to the encrypted data 52 when that encrypted data 52 is played back.

This too can be realized in various ways. In one embodiment decryption information recording unit 22 inserts messages 76 with the pointer information among the encrypted data 52, so that effectively the incoming stream from input 21a is stored in mass storage unit 20, except that the messages with decryption information are replaced by messages with pointer information. A special so-called "PID" (Packet ID) may be used for this. In a conventional conditional access stream it is known to structure the stream into packets of data, each having a PID. Different PID values correspond to separate substreams, such as an image stream, an audio stream etc. Tables are transmitted that specify the relation between PID values and streams. During decryption of the stream a receiving unit selects packets according to PID value. When the pointer information is contained in packets with a PID that is specific to pointer information it is easy to select the pointer information from the stream on replay.

In another embodiment demultiplexer 21 stores the original messages with the encrypted data in mass storage unit 20. Decryption information recording unit 22 replaces part of the messages by pointer information. In this way, it is straightforward to maintain the original timing during replay.

For this embodiment it is desirable that the service provider that broadcasts the stream reserves space in the messages with decryption information for inserting the pointer information. The service provider may even insert the pointer information into the stream. That is, the service provider may broadcast a stream that contains encrypted data and messages with decryption information to decrypt encrypted data from segments of the stream, wherein the messages contain pointer information that identify a rank number of the message during transmission of a program (the first message having rank number "1", the second message rank number "2" etc.). Alternatively the pointer information may specify the rank number of the decryption information in the message, this rank number being incremented each time when messages with new decryption starts being included in the messages. When decryption information recording unit 22 stores the items of decryption information so that they can be retrieved using this pointer information, this pointer information may be used in an apparatus as shown in figure 2 to retrieve the items.

The service provider may even provide the items of decrypted information. In that case decryption information recording unit 22 may be omitted. The items needed to decrypt a recorded program may be transmitted by the provider to the subscriber as part of the stream, or via a separate information exchange, for example via a telephone line or via the Internet. Thus, the service provider may selectively enable subscribers to replay recorded data, for example after payment of a fee.

Preferably the items of decryption information are not stored among the encrypted data. This allows decryption information recording unit 22 to decrypt and encrypt the decryption information for later use, without having to buffer encrypted data during decryption and encryption.

### Sub-sampling

In embodiments of the apparatus of figure 2 or 4 decryption information recording unit 22 stores all ECM's in mass storage unit 20. However, this may lead to considerable overhead when ECM's with the same control words are contained frequently in the data stream. In a further embodiment decryption information recording unit 22 effectively subsamples the ECM's, storing control words only from some ECM's. In one version of this embodiment the subsampling rate (the fraction of ECM's that is used) may have any value, as long as at least one ECM is sampled in each half period of the second signal.

In a preferred embodiment decryption information recording unit 22 triggers subsampling of the ECM's upon detection of transitions in the content of the ECM's, i.e. on the edges of the second signal 32. Preferably the first ECM after such an edge is used to store the item of decryption information. A third signal 34 in figure 3 indicates sampling points 35 where the ECM's are sampled in this way. When no ECM contains a control word for past encrypted data, sampling just behind transitions of the second signal 32 has the advantage that the samples allow decryption of subsequent encrypted data that is encrypted for decryption with the currently valid and the next control word. Alternatively, an ECM at a predetermined rank order after the edge (e.g. the fifth or the tenth ECM after the edge) may be used. The exact rank order does not matter as long as it is known that at least the message is repeated the corresponding number of times in the incoming data stream from input 21a.

### Replay

During replay, control unit 24 determines which parts of the stream of encrypted data are retrieved from mass storage unit 20 and when. Control unit 24 does so by sending address information to mass storage unit 20, such as an address, a disk or tape position indicator of the required encrypted data. In response, mass storage unit 20 outputs the required data to receiving unit 26. At the same time decryption information access unit 25 detects which item of decryption information corresponds to the accessed data and whether it is necessary to supply decryption information from that item to receiving unit 26, for example because that decryption information has not yet been supplied.

There are various possible methods of determining whether decryption information must be supplied from an item of decryption information. For example, decryption information access unit 25 may monitor the addresses of the accessed encrypted data, and if the addresses pass a point for which an item has been stored, decryption information access unit 25 supplies decryption information from that item to receiving unit 26. Decryption information access unit 25 may use indications such as a single address value (or position value) per item indicating a position in the stream for the item, or a plurality of address values per item, indicating different positions in the stream where the item may be supplied. Thus the timing of the original stream can be constructed very accurately.

In the case where time stamps are stored in association with the items, decryption information access unit 25 may supply the time stamps at a time when a time counter (not shown) at the replay side reaches the value of the time stamp. (The time counter may be used in a conventional way to control correct timing of replay of the encrypted data).

As an alternative, decryption information access unit 25 may detect pointers to items of encryption information from among the retrieved encrypted data, loads the item if it has not yet been loaded and supplies the decryption information from the item to receiving unit. In the case where messages with pointer information are stored among the encrypted data, for example, decryption information access unit 25 may detect these messages (for example from the PID of these messages) and extract the pointer information. Decryption information access unit 25 uses the extracted pointer information to select the corresponding item of decryption information and supplies that information to receiving unit 26.

Receiving unit 25 basically operates in the same way as receiving unit 10 of figure 1. processing encrypted data and messages with decryption information. However, it may not be necessary to use demultiplexer 12, since decryption information and encrypted data is already retrieved separately from mass storage unit 10.

Normally, the encrypted data is played back in the temporal pattern in which it was received at input 21a, that is in a sequence and at a speed required for normal viewing.

### Trick play

The apparatus of figure 2 supports trick mode replay. Trick mode replay includes for example one or more of fast forward display, reverse play display, slow motion etc. Generally, during trick mode replay data from the stream is output to a rendering device in an abnormal temporal pattern, that is, not at normal speed or in a backward temporal direction or periodically skipping part of the stream. (In some special types of apparatus, the normal mode may not even be supported, the apparatus allowing access only in some trick modes, e.g. when the subscriber has not (yet) paid for viewing in the normal mode).

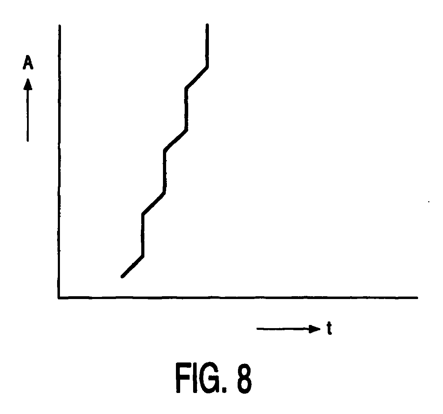

Figure 8 illustrates access to mass storage unit 20 during fast forward. Time "t" is plotted horizontally and addresses "A" that represent the time of playback during normal mode playback are plotted vertically. During trick mode play control unit 24 supplies advancing addresses A to mass storage unit 20, periodically skipping a range of addresses.

Decryption information access unit 25 supplies decryption information needed to decrypt the retrieved encrypted information. For example, decryption information access unit 25 may retrieve a list of points in the stream of encrypted data for which items of decryption information are stored, the list containing associated items of decryption information or pointers thereto. In this case decryption information access unit 25 monitors the addresses of the encrypted data that will be supplied by control unit 24. When access unit determines that the addresses are about to access addresses past a point for which decryption information is stored decryption information, access unit 25 supplies the decryption information from the associated item of decryption information to receiving unit 26.

Preferably, the access unit 25 retrieves the decryption information at a selected point in time so that this point in time is followed by at least a predetermined time interval before the encrypted data is supplied. That is, the same predetermined time interval is available to decrypt the item of decryption information, independent of the speed of replay.

In the embodiment of figure 4, where specific frames have been identified in the encrypted data prior to retrieval from mass storage-unit 20, control unit 24 may retrieve encrypted data containing the identified frames. In this case, control unit 24 first retrieves stored pairs of addresses (X,Y) for a section of encrypted data, then supplies addresses to mass storage unit 20 to retrieve encrypted data according to the address X, and then supplies address Y of the decryption information to decryption information access unit 25 to command supply of the corresponding decryption information to receiving unit 26.

Preferably the apparatus creates a delay between supply of the decryption information and the corresponding encrypted data. This may be realized for example by providing a buffer (not shown) between mass storage unit 20 and receiving unit 26 to buffer the data during said delay, or by supplying information about addresses from which it is intended to retrieve encrypted information early to decryption information access unit 25. This allows decryption information access unit 25 to supply decryption information in advance so that receiving unit 26 has time to decrypt the control words before they are needed.

In some types of trick mode play (e.g. reverse play back) the encrypted data may be retrieved at least partially in reverse order. In such a mode decryption information access unit 25 preferably determines points in the encrypted data where an item of decryption information would become valid during forward play. When play back passes such a point in reverse direction decryption information access unit 25 selects an item of decryption information that would chronologically be a last preceding item before that point during normal play. Obviously other methods of selecting the item may be used, such as associating items with intervals starting and ending at respective points, and detecting whether play back will access data in such an interval to select the associated item. Decryption information access unit 25 then outputs the selected item for use during reverse play. (Of course, although useable, this is not needed in the embodiment of figure 4, where the relevant item can be determined directly from the retrieved data).

In this way the apparatus allows for replay and/or trick mode replay of stored encrypted data. The mass storage unit 20 does not need to be tamperproof: replaceable memories, discs or tapes may be used. Preferably parts of the receiving unit 26 are made tamper proof (for example by using a secure device, such as a smart card, to decrypt control words), as well as, in the case of the embodiment of figure 4, the decryption unit 40. It will be appreciated that, for trick play, decryption information access unit 25 preferably uses pointer information to locations in the stream of encrypted data that can be retrieved separately from the stream of encrypted data, or at least without having to retrieve the stream of encrypted data in its entirety to search for pointer information. This reduces the amount of information that needs to be retrieved from mass storage unit 20. The embodiments where pointer information is stored in association with items of decryption information satisfy this requirement.

### Other aspects

It will be appreciated that the invention is not limited to the embodiments shown. For example, although it is preferred, for ease of access, that both encrypted data and the items of decryption information are stored in the same mass storage unit 20, this is of course not necessary. A separate memory may be used for items of decryption information. Also, although the items of decryption information are preferably retrieved as playback progresses, it is also possible to retrieve all relevant items for a recorded stream as a block in advance. This is facilitated by the use of subsampling to select the items that are stored in the first place. By using items that have been preloaded as a block, decryption information access unit 25 is able to respond quickly to the addresses of encrypted data that control unit 24 selects for replay.

## Claims

1. A method of processing a broadcast data stream that contains a stream of encrypted data a.nd a stream of messages, data in successive segments of the stream of encrypted data being decryptable with successive decryption information from the messages, the method comprising
- storing the stream of encrypted data separately retrievable from the decryption information;
- storing items with decryption information for the encrypted data in a separate file separately retrievable from the stream;
- storing synchronization information linking respective points in the stored stream of encrypted data to respective ones of the items with decryption information;
- replaying a stored part of the stream of encrypted data separately retrieved from the decryption information;
- retrieving the items with decryption information from the separate file separately from the stream of encrypted data for the points in said stored part during said replaying;
- combining the retrieved items with decryption information with the stream during replay at times selected under control of the synchronization information.

2. A method according to Claim 1, wherein during replay the stream is fed to a decoder and the decryption information is combined with the stream by feeding the decryption information to a secure device, which in response to the decryption information feeds control words to the decoder.

3. A method according to Claim 1, comprising the steps of
- storing the items with decryption information each in association with a respective time stamp value;
- maintaining a progressive time value counter during replay of the stream; and
- combining each particular retrieved item with the stream in response to detection that the time stamp counter reaches the time stamp value associated with the particular retrieved item.

4. A method according to Claim 3, comprising
- maintaining a further progressive time value counter during reception of the stream;
- sampling values from said further time value counter each time when a respective one of the messages is detected during reception;
- storing decryption information from said message in the items with decryption information;
- storing the sampled value sample for each respective one of the messages as said time stamp value associated with the item that contains decryption information from said message.

5. A method according to claim 3, wherein the encrypted data contains time counting information used for controlling progress of the time value counter.

6. A method according to Claim 1 comprising
- detecting respective ones of the messages detected during reception of the stream;
- assigning different sequence numbers to the detected messages;
- storing information representing the sequence numbers among the encrypted data at locations where the messages to which the sequence numbers have been assigned occurred in the stream during reception;
- storing each sequence number in association with a respective one of the items with decryption information that contains encryption information from the message to which the sequence number is assigned;
- using the sequence numbers stored among the stream to retrieve and time the items associated with the sequence numbers.

7. A method according to Claim 6, wherein the messages are stored at their original location among the encrypted data, the sequence numbers being inserted in the messages during storage, the decryption information from the items associated with the sequence numbers inserted in the items being used when message are encountered during replay.

8. A conditional access apparatus (10) for processing a broadcast data stream that contains a stream of encrypted data and a stream of messages, data in successive segments of the stream of encrypted data being decryptable with successive decryption information from the messages, the apparatus comprising
- storage means (20), the apparatus being arranged to store the stream of encrypted data in the storage means separately retrievable from the decryption information, as well as storing items with decryption information for the encrypted data in a separate file separately retrievable from the stream, and storing synchronization information linking respective points in the stored stream of encrypted data to respective ones of the items with decryption information;
- a replay unit for replaying a stored part of the stream of encrypted data separately retrieved from the decryption information;
- a retrieval unit (25) arranged to retrieve the items with decryption information from a separate file separately from the stream of encrypted data for the points in said stored part from the storage means, and to feed said items to the replay unit during said replaying;
- a secure device (26), arranged to generate control words under control of the decryption information and to feed the control words to the replay unit to decrypt the items;
- a synchronization unit (25) arranged to combing the retrieved items with decryption information with the stream during replay at times selected under control of the synchronization information by feeding the decryption information to the secure device at the selected times, for generating the control words.

9. A conditional access apparatus (10) according to Claim 8, comprising
- means (22) for generating time stamp information, the storage means storing the items with decryption information each in association with a respective time stamp value;
- a progressive time value counter that is active during replay of the stream;
- the synchronization unit (25) combining each particular retrieved item with the stream in response to detection that the time stamp counter reaches the time stamp value associated with the particular retrieved item.

10. A conditional access apparatus (10) according to Claim 9, comprising
- a further progressive time value counter active during reception of the stream;
- a sampling unit for sampling values from said further time value counter each time when a respective one of the messages is detected duping reception;
- the storage means (20) storing decryption information from said message in the items with decryption information and storing the sampled value sample for each respective one of the messages as said time stamp value associated with the item that contains decryption information from said message.

11. A conditional access apparatus (10) according to Claim 8 comprising
- a detection unit (25) for detecting respective ones of the messages during reception of the stream and assigning different sequence numbers to the detected messages;
- the storage means (20) storing information representing the sequence numbers among the encrypted data at locations where the messages to which the sequence numbers have been assigned occurred in the stream during reception; and storing each sequence number in association with a respective one of the items with decryption information that contai.ns encryption information from the message to which the sequence number is assigned;
- the synchronization unit (25) using the sequence numbers stored among the stream to retrieve and time the items associated with the sequence numbers.

12. A conditional access apparatus (10) according to Claim 6, wherein the messages are stored at their original locations among the encrypted data, the sequence numbers being inserted in the messages during storage, the decryption information from the items associated with the sequence numbers inserted in the items being used when the messages are encountered during replay.

## Patentansprüche

1. Verfahren zum Verarbeiten eines Rundsende-Datenstroms, der einen Strom mit verschlüsselten Daten und einen Nachrichtenstrom enthält, wobei Daten in aufeinanderfolgenden Segmenten des Verschlüsselte-Daten-Stroms mit aufeinanderfolgenden Entschlüsselungsinformationen aus den Nachrichten entschlüsselbar sind, wobei das Verfahren aufweist:
-- Speichern des Stroms verschlüsselter Daten, die getrennt von den Entschlüsselungsinformationen abrufbar sind,
-- Speichern von Elementen mit Entschlüsselungsinformationen für die verschlüsselten Daten in einer getrennten Daten, die getrennt von dem Strom abrufbar ist,
-- Speichern von Synchronisierungsinformationen, die jeweilige Punkte in dem gespeicherten Verschlüsselte-Daten-Strom mit jeweiligen der Elemente mit Entschlüsselungsinformationen verknüpfen,
-- Erneutes Abspielen eines gespeicherten Teils des Verschlüsselte-Daten-Stroms, der getrennt von den Entschlüsselungsinformationen abgefragt wird,
-- Abfragen der Elemente mit Entschlüsselungsinformationen aus der getrennten Datei getrennt von dem Verschlüsselte-Daten-Strom für die Punkte in dem gespeicherten Teil während des erneuten Abspielens,
-- Kombinieren der abgefragten Elemente mit Entschlüsselungsinformationen mit dem Strom während des erneuten Abspielens zu Zeitpunkten, die unter der Steuerung der Synchronisierungsinformationen ausgewählt werden.

2. Verfahren gemäß Anspruch 1, wobei der Strom während des erneuten Abspielens in eine Entschlüsselungseinrichtung eingespeist wird und die Entschlüsselungsinformationen mit dem Strom durch Einspeisen der Entschlüsselungsinformationen in eine Sicherungseinrichtung kombiniert werden, die in Antwort auf die Entschlüsselungsinformationen Steuerwörter in die Entschlüsselungseingseinrichtung einspeist.

3. Verfahren gemäß Anspruch 1, die folgenden Schritte aufweisend:
- Speichern der Elemente mit Entschlüsselungsinformationen jeweils in Verbindung mit einem jeweiligen Zeitstempelwert,
- Beibehalten eines progressiven Zeitwertzählers während des erneuten Abspielens des Stroms, und
- Kombinieren von jedem einzelnen abgefragten Element mit dem Strom in Antwort auf das Detektieren, dass der Zeitstempelzähler den Zeitstempelwert in Verbindung mit dem einzelnen abgefragten Element erreicht.

4. Verfahren gemäß Anspruch 3, aufweisend:
- Beibehalten eines weiteren progressiven Zeitwertzählers während des Empfangs des Stroms,
- Abtasten von Werten aus dem weiteren Zeitwertzähler jedesmal, wenn eine jeweilige der Nachrichten während des Empfangs detektiert wird,
- Speichern von Entschlüsselungsinformationen aus der Nachricht in den Elementen mit Entschlüsselungsinformationen,
- Speichern der abgetasteten Wertprobe für jede betreffende der Nachrichten als den Zeitstempelwert, der mit dem Element verknüpft ist, das die Entschlüsselungsinformationen aus der Nachricht enthält.

5. Verfahren gemäß Anspruch 3, wobei die verschlüsselten Daten Zeit-Zählinformationen enthalten, die zum Steuern des Fortschritts des Zeitwertzählers verwendet werde.

6. Verfahren gemäß Anspruch 1, aufweisend:
- Detektieren von jeweiligen während des Empfangs des Stroms detektierten Nachrichten,
- Zuweisen verschiedener Sequenznummern den detektierten Nachrichten,
- Speichern von Informationen, die die Sequenznummern darstellen, aus den verschlüsselten Daten an Positionen, an denen die Nachrichten, denen die Sequenznummern zugewiesen werden, während das Empfangs in dem Strom aufgetreten sind,
- Speichern jeder Sequenznummer in Verbindung mit einem betreffenden der Elemente mit Entschlüsselungsinformationen, das die Verschlüsselungsinformationen aus der Nachricht enthält, der die Sequenznummer zugewiesen wurde,
- Verwenden der Sequenznummern, die in dem Datenstrom gespeichert sind, zum Abfragen und zeitlichen Abstimmen der Elemente, die mit den Sequenznummern verknüpft sind.

7. Verfahren gemäß Anspruch 6, wobei die Nachrichten an ihren ursprünglichen Positionen in den verschlüsselten Daten gespeichert werden, wobei die Sequenznummern während des Speicherns in die Nachrichten eingesetzt werden, wobei die Entschlüsselungsinformationen aus den Elementen, die mit den in die Elemente eingesetzten Sequenznummern verknüpft sind, verwendet werden, wenn die Nachrichten während des erneuten Abspielens angetroffen werden.

8. Zugangskontrollvorrichtung (10) zum Verarbeiten eines Rundsende-Datenstroms, der einen Strom mit verschlüsselten Daten und einen Nachrichtenstrom enthält, wobei Daten in aufeinanderfolgenden Segmenten des Verschlüsselte-Daten-Stroms mit aufeinanderfolgenden Entschlüsselungsinformationen aus den Nachrichten entschlüsselbar sind, wobei die Vorrichtung aufweist:
- Speichermittel (20), wobei die Vorrichtung zum Speichern des Verschlüsselte-Daten-Stroms in dem Speichermittel getrennt von den Entschlüsselungsinformationen abrufbar eingerichtet ist, sowie Elemente mit Entschlüsselungsinformationen für die verschlüsselten Daten in einer getrennten Datei speichert, die getrennt von dem Strom abrufbar ist, und Synchronisierungsinformationen speichert, die jeweilige Punkte in dem gespeicherten Verschlüsselte-Daten-strom mit jeweiligen der Elemente mit Entschlüsselungsinformationen verknüpfen,
- eine Wiederabspiel-Einheit zum erneuten Abspielen eines gespeicherten Teils des Verschlüsselte-Daten-Stroms, der getrennt von den Entschlüsselungsinformationen abgefragt wird,
- eine Abfrage-Einheit (25), die zum Abfragen der Elemente mit Entschlüsselungsinformationen aus einer getrennten Datei getrennt von dem Verschlüsselte-Daten-Strom für die Punkte in dem gespeicherten Teil aus den Speichermitteln, und zum Einspeisen der Elemente in die Wiederabspiel-Einheit während des erneuten Abspielens eingerichtet ist,
- eine Sicherungseinrichtung (26), die zum Erzeugen von Steuerwörtern unter der Steuerung der Entschlüsselungsinformationen und zum Einspeisen der Steuerwörter in die Wiederabspiel-Einheit zum Entschlüsseln der Elemente eingerichtet ist,
- eine Synchronisierungseinheit (25), die zum Kombinieren der abgefragten Elemente mit Entschlüsselungsinformationen mit dem Strom während des erneuten Abspielens zu Zeitpunkten, die unter der Steuerung der Synchronisierungsinformationen ausgewählt werden, eingerichtet ist, durch Einspeisen der Entschlüsselungsinformationen in die Sicherungseinrichtung zu den ausgewählten Zeitpunkten zum Erzeugen der Kontrollwörter.

9. Zugangskontrollvorrichtung (10) gemäß Anspruch 8, aufweisend:
- Mittel (22) zum Erzeugen von Zeitstempel-Informationen, wobei die Speichermittel die Elemente mit Entschlüsselungsinformationen jeweils in Verbindung mit einem jeweiligen Zeitstempelwert speichern,
- einen progressiven Zeitwertzähler, der während des erneuten Abspielens des Stroms aktiv ist,
- die Synchronisierungseinheit (25), die jedes einzelne abgefragte Element in Antwort auf das Delektieren des Erreichens des Zeitstempeiwertes durch den Zeitstempelzähler, der mit dem einzelnen abgefragten Element verknüpft ist, mit dem Datenstrom kombiniert.

10. Zugangskontrolvorrichtung (10) gemäß Anspruch 9, aufweisend:
- einen weiteren progressiven Zeitwertzähler, der während des Empfangs des Stroms aktiv ist,
- eine Abtasteinheit zum Abtasten von Werten aus dem weiteren Zeitwertzähler jedesmal wenn eine betreffende der Nachrichten während des Empfangs detektiert wird,
- das Speichermittel (20), das Entschlüsselungsinformationen aus der Nachricht in den Elementen mit Entschlüsselungsinformationen speichert, und das die abgetastete Wertprobe für jede betreffende der Nachrichten als den Zeitstempelwert speichert, der mit dem Element verknüpft ist, das Entschlüsselungsinformationen aus der Nachricht enthält.

11. Zugangskontrollvorrichtung (10) gemäß Anspruch 8, aufweisend:
- eine Detektierungseinheit (25) zum Delektieren von jeweiligen der Nachrichten während des Empfangs des Stroms und zum Zuweisen verschiedener Sequenznummern an die detektierten Nachrichten,
- das Speichermittel (20), das Informationen, die die Sequenznummern darstellen, unter den verschlüsselten Daten an Positionen speichert, an denen die Nachrichten, denen die Sequenzummern zugewiesen wurden, in dem Strom während des Empfangs auftraten, und das jede Sequenznummer in Verbindung mit einem jeweiligen der Elemente mit Entschlüsselungsinformationen speichert, das Verschlüsselungsinformationen aus der Nachricht enthält, der die Sequenznummer zugewiesen ist,
- die Synchronisierungseinheit (25), die die Sequenznummern, die in dem Strom gespeichert sind, zum Abfragen und zeitlichen Abstimmen der Elemente, die mit den Sequenznummern verknüpft sind, verwendet,

12. Zugangskontrollvorrictung (10) gemäß Anspruch 6, wobei die Nachrichten an ihren ursprünglichen Positionen unter den verschlüsselten Daten gespeichert werden, wobei die Sequenznummern während des Speicherns in die Nachrichten eingefügt werden, wobei die Entschlüsselungsinformationen aus den Elementen, die mit den Sequenznummern verknüpft sind, die in die Elemente eingefügt werden, verwendet werden, wenn die Nachrichten während des erneuten Abspielens angetroffen werden.

## Revendications

1. Procédé de traitement d'un flux de données à diffusion générale qui contient un flux de données encryptées et un flux de messages, des données dans des segments successifs du flux de données encryptées étant décryptables avec des informations de décryptage successives à partir des messages, le procédé comprenant les étapes consistant à :
- stocker le flux de données encryptées récupérables séparément des informations de décryptage ;
- stocker des articles avec des informations de décryptage pour les données encryptées récupérables indépendamment du flux ;
- stocker des informations de synchronisation liant des points respectifs dans le flux stocké de données encryptées à des articles respectifs des articles avec des informations de décryptage ;
- relire une partie stockée du flux de données encryptées récupérées séparément des informations de décryptage ;
- récupérer les articles avec des informations de décryptage à partir du fichier séparé séparément du flux de données encryptées pour les points dans ladite partie stockée au cours de ladite étape consistant à relire ;
- combiner les articles récupérés avec des informations de décryptage avec le flux au cours de la relecture à des temps sélectionnés sous le contrôle des informations de synchronisation.

2. Procédé selon la revendication 1, dans lequel, au cours de la relecture, le flux est fourni à un décodeur et les informations de décryptage sont combinées avec le flux en fournissant les informations de décryptage à un dispositif sécurisé, qui, en réponse aux informations de décryptage, fournit des mots de contrôle au décodeur.

3. Procédé selon la revendication 1, comprenant les étapes consistant à :
- stocker les articles avec des informations de décryptage, chacun en association à une valeur d'estampille temporelle respective ;
- maintenir un compteur de valeur temporelle progressif au cours de la relecture du flux ; et
- combiner chaque article récupéré particulier avec le flux en réponse à une détection que le compteur d'estampille temporelle atteint la valeur d'estampille temporelle associée à l'article récupéré particulier.

4. Procédé selon la revendication 3, comprenant les étapes consistant à :
- maintenir un compteur de valeur temporelle progressif supplémentaire au cours de la réception du flux ;
- échantillonner des valeurs à partir dudit compteur de valeur temporelle supplémentaire à chaque fois qu'un message respectif des messages est détecté au cours de la réception ;
- stocker des informations de décryptage à partir dudit message dans les articles avec des informations de décryptage;
- stocker l'échantillon de valeur échantillonnée pour chaque message respectif des messages en tant que dite valeur d'estampille temporelle associée à l'article qui contient des informations de décryptage à partir dudit message.

5. Procédé selon la revendication 3, dans lequel les données encryptées contiennent des informations de comptage de temps utilisées pour contrôler le progrès du compteur de valeur temporelle.

6. Procédé selon la revendication 1, comprenant les étapes consistant à :
- détecter des messages respectifs des messages détectés au cours de la réception du flux ;
- attribuer des numéros de séquence différents aux messages détectés ;
- stocker des informations représentant les numéros de séquence parmi les données encryptées dans des emplacements où les messages auxquels les numéros de séquence ont été attribués se sont produits dans le flux au cours de la réception ;
- stocker chaque numéro de séquence en association à un article respectif des articles avec des informations de décryptage qui contiennent des informations d'encryptage à partir du message auquel le numéro de séquence est attribué ;
- utiliser les numéros de séquence stockés parmi le flux pour récupérer et synchroniser les articles associés aux numéros de séquence.

7. Procédé selon la revendication 6, dans lequel les messages sont stockés dans leurs emplacements d'origine parmi les données encryptées, les numéros de séquence étant insérés dans les messages au cours du stockage, les informations de décryptage à partir des articles associés aux numéros de séquence insérés dans les articles étant utilisées lorsque les messages sont rencontrés au cours de la relecture.

8. Appareil d'accès conditionnel (10) pour traiter un f!ux de données à diffusion générale qui contient un flux de données encryptées et un flux de messages, des données dans des segments successifs du flux de données encryptées étant décryptables avec des informations de décryptage successives à partir des messages, l'appareil comprenant :
- des moyens de stockage (20), l'appareil étant agencé pour stocker le flux de données encryptées dans les moyens de stockage, ainsi que stocker des articles avec des informations de décryptage pour les données encryptées dans un fichier séparé récupérable séparément du flux, et stocker des informations de synchronisation liant des points respectifs dans le flux stocké de données encryptées à des articles respectifs des articles avec des informations de décryptage ;
- une unité de relecture pour relire une partie stockée du flux de données encryptées récupérées séparément des informations de décryptage ;
- une unité de récupération (25) agencée pour récupérer les articles avec des informations de décryptage à partir d'un fichier séparé séparément du flux de données encryptées pour les points dans ladite partie stockée à partir des moyens de stockage, et pour fournir lesdits articles à l'unité de relecture au cours de ladite étape consistant à relire ;
- un dispositif sécurisé (26), agencé pour générer des mots de contrôle sous le contrôle des informations de décryptage et pour fournir les mots de contrôle à l'unité de relecture pour décrypter les articles ;
- une unité de synchronisation (25) agencée pour combiner les articles récupérés avec des informations de décryptage avec le flux au cours de la relecture à des temps sélectionnés sous le contrôle des informations de synchronisation en fournissant les informations de décryptage au dispositif sécurisé aux temps sélectionnés, pour générer les mots de contrôle.

9. Appareil d'accès conditionnel (10) selon la revendication 8, comprenant :
- des moyens (22) pour générer des informations d'estampille temporelle, les moyens de stockage stockant les articles avec des informations de décryptage, chacun en association à une valeur d'estampille temporelle respective ;
- un compteur de valeur temporelle progressif qui est actif au cours de la relecture du flux ;
- l'unité de synchronisation (25) combinant chaque article récupéré particulier avec le flux en réponse à une détection que le compteur d'estampille temporelle atteint la valeur d'estampille temporelle associée à l'article récupéré particulier.

10. Appareil d'accès conditionnel (10) selon la revendication 9, comprenant :
- un compteur de valeur temporelle progressif supplémentaire actif au cours de la réception du flux ;
- une unité d'échantillonnage pour échantillonner des valeurs à partir dudit compteur de valeur temporelle supplémentaire à chaque fois qu'un message respectif des messages est détecté au cours de la réception ;
- les moyens de stockage (20) stockant des informations de décryptage à partir dudit message dans les articles avec des informations de décryptage et stockant l'échantillon de valeur échantillonnée pour chaque message respectif des messages en tant que dite valeur d'estampille temporelle associée à l'article qui contient des informations de décryptage à partir dudit message.

11. Appareil d'accès conditionnel (10) selon la revendication 8, comprenant :
- une unité de détection (25) pour détecter des messages respectifs des messages au cours de la réception du flux et attribuer des numéros de séquence différents aux messages détectés ;
- les moyens de stockage (20) stockant des informations représentant les numéros de séquence parmi les données encryptées dans des emplacements où les messages auxquels les numéros de séquence ont été attribués se sont produits dans le flux au cours de la réception ; et stockant chaque numéro de séquence en association à un article respectif des articles avec des informations de décryptage qui contiennent des informations d'encryptage à partir du message auxquels le numéro de séquence est attribué ;
- l'unité de synchronisation (25) utilisant les numéros de séquence stockés parmi le flux pour récupérer et synchroniser les articles associés aux numéros de séquence.

12. Appareil d'accès conditionnel (10) selon la revendication 6, dans lequel les messages sont stockés dans leurs emplacements d'origine parmi les données encryptées, les numéros de séquence étant insérés dans les messages au cours du stockage, les informations de décryptage à partir des articles associés aux numéros de séquence insérés dans les articles étant utilisées lorsque les messages sont rencontrés au cours de la relecture.
